(19) Europäisches Patentamt / European Patent Office / Office européen des brevets

(11) **EP 2 681 825 B1**

(12) **EUROPEAN PATENT SPECIFICATION**

(45) Date of publication and mention of the grant of the patent:
**03.01.2018  Bulletin 2018/01**

(51) Int Cl.:
*H02J 9/06* (2006.01)      *H02J 3/00* (2006.01)

(21) Application number: **12710668.0**

(22) Date of filing: **28.02.2012**

(86) International application number:
**PCT/EP2012/053329**

(87) International publication number:
**WO 2012/116973 (07.09.2012 Gazette 2012/36)**

(54) **FAST BUS TRANSFER METHOD AND DEVICE**

TRANSFERVORRICHTUNG UND VERFAHREN FÜR SCHNELLEN BUS

DISPOSITIF ET MÉTHODE DE TRANSFERT POUR BUS RAPIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2011  CN 201110047894**

(43) Date of publication of application:
**08.01.2014  Bulletin 2014/02**

(73) Proprietor: **Siemens Aktiengesellschaft
80333 München (DE)**

(72) Inventors:
  • **QIN, Lei Ming
    Nanjing 211100 (CN)**
  • **CAO, Zhen
    Nanjing 211100 (CN)**
  • **GU, Xin Bo
    Nanjing 211100 (CN)**
  • **KRAMER, Dieter
    01279 Dresden (DE)**
  • **MIAO, Qiu Gun
    Nanjing 211100 (CN)**

(74) Representative: **Patentanwaltskanzlei WILHELM & BECK
Prinzenstraße 13
80639 München (DE)**

(56) References cited:
**WO-A1-93/06644      DE-A1- 2 108 307**

• **"IEEE Design Guide for Electric Power Service Systems for Generating Stations;IEEE Std 666-2007 (Revision of IEEE Std 666-1991)", IEEE STANDARD, IEEE, PISCATAWAY, NJ, USA, 4 May 2007 (2007-05-04), pages 1-350, XP017694810, ISBN: 978-0-7381-4987-5**
• **BOTTRELL ET AL: "Fast Bus-Transfer Techniques for maintaining full plant production", RECORD OF -CONFERENCE PAPERS. INDUSTRIAL APPLICATION SOCIETY, 36TH ANNUAL PETROLEUM AND CHEMICAL INDUSTRY CONFERENCE (CAT NO. 89CH2777-1) 1989 IEEE, 1989, pages 229-237, XP002694185, NY, USA DOI: 10.1109/pcicon.1989.77889**
• **YALLA M V V S: "Design of a High-Speed Motor Bus Transfer System", IEEE TRANSACTIONS ON INDUSTRY APPLICATIONS, IEEE SERVICE CENTER, PISCATAWAY, NJ, US, vol. 46, no. 2 , pages 612-619, XP011301404, ISSN: 0093-9994**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a fast bus transfer method, and especially, to a real-time fast transfer method. The present invention also relates to a fast bus transfer device, and especially, to a real-time fast transfer device.

Background Art

Fast bus transfer (FBT) can quickly transfer a bus connected to a load (for example, a motor) to a backup power supply when a main power supply fails, and its function is not only to maintain the continuous operation of the equipment, but also to avoid damage to the motor or other connected loads. Usually, such fast bus transfer is manually started, or in the case of failure, it is started by an external device, and its conventional transfer modes comprise three types: fast transfer, in-phase transfer, and residual voltage transfer. Each transfer mode is aimed at a particular situation, and the transfer modes each have their own criteria. Since fast transfer can theoretically keep the power interruption of the bus within the shortest time period and protect the motor or other loads from excessive or accumulated stress, fast transfer is usually preferred. If the criterion for fast transfer fails to be met, then the fast transfer equipment cannot send out a close command to the circuit breaker of the backup power supply, and the in-phase transfer mode will be subsequently started, that is, the in-phase transfer mode serves as a backup solution to the fast transfer mode. Likewise, the residual voltage transfer mode serves as a backup solution to the in-phase transfer mode.

The criteria for these three different transfer modes are as follows:

1) Criteria for fast transfer: $\Delta\varphi < \Delta\varphi_{FTparameter}$ and $\Delta f < \Delta f_{FTparameter}$.
Here, $\Delta\varphi$ is the phase angle difference between the attenuated bus voltage and the backup power supply voltage, $\Delta f$ is the frequency difference between the attenuated bus voltage and the backup power supply voltage, $\Delta\varphi_{FTparameter}$ is a limit parameter of $\Delta\varphi$, $\Delta f_{FTparameter}$ is a limit parameter of $\Delta f$, in which $\Delta\varphi$ and $\Delta f$ are real-time measurement values, while $\Delta\varphi_{FTparameter}$ and $\Delta f_{FTparameter}$ are instantaneous values when the circuit breaker of the main power supply opens and are determined by the user.

2) Criterion for in-phase transfer: $\Delta\varphi_{forecast} < 10°$.
Here, $\Delta\varphi_{forecast}$ is a forecast phase angle difference between the attenuated bus voltage and the voltage of the backup power supply, $\Delta\varphi_{forecast}$ being a forecast value. If the fast transfer is missed, then the fast bus transfer device will automatically convert to the in-phase transfer. In-phase transfer is suitable for the situation where the phase angle difference is zero at the moment when the circuit breaker of the backup power supply is closed.

3) Criterion for residual voltage transfer: when the bus voltage drops to a predefined value, for example 30% of the rated value, then close the circuit breaker of the backup power supply.

This transfer is the slowest of all the transfer modes.

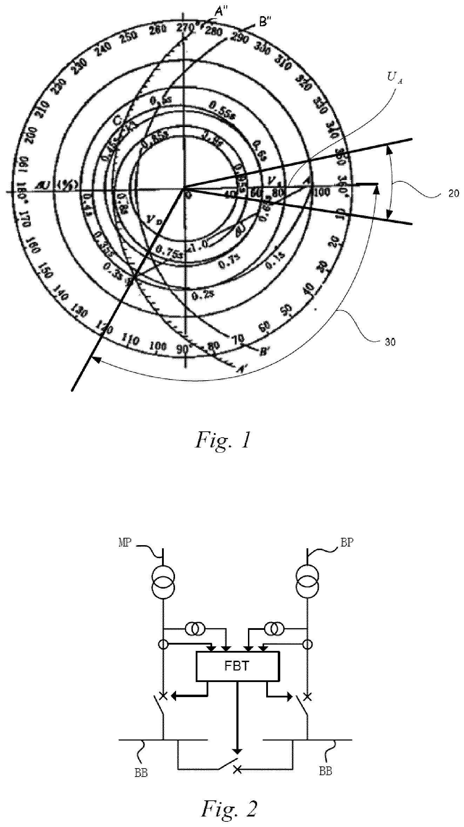

The criteria for the above various transfer modes are all restricted by the characteristics of the motor or other loads. The terminal voltage of the motor caused by the voltage difference across the circuit breaker should not exceed a permitted over-voltage value. It is usually 1.1 times the rated voltage $U_n$. Fig. 1 shows the characteristic of an attenuated residual voltage, in which are illustratively shown a fast transfer section 30, an in-phase transfer section 20 and the voltage $U_A$ of the backup power supply. Supposing that the voltage difference is 1.0 $U_n$, on the right side of the curve A'-A" is a safe area for re-supply. When the voltage difference is lower than 1.0 $U_n$, a new voltage level will form a new safe area, i.e., the right side of B'-B".

Since the premise for determining parameters is to comprehensively analyze the residual voltage characteristic, it is hard for the user to use fast transfer mode correctly. When the motor disconnects the electrical connection with the power supply, the energy stored in the magnetic field of the motor will generate an induced voltage which is referred to as residual voltage. The amplitude and frequency of this induced voltage will attenuate, the attenuation trend and attenuation rate depending upon a variety of factors, such as the type of motor, the load of the motor, the inertia of the motor and so on. Therefore, it is difficult for the user to determine the values for the parameters $\Delta\varphi_{FTparameter}$ and $\Delta f_{FTparameter}$ properly. At the same time, theoretically, the residual voltage characteristic will change if any one of the factors varies, therefore $\Delta\varphi_{FTparameter}$ and $\Delta f_{FTparameter}$ will also need to be re-determined accordingly, however, it is quite difficult. In view of this, the user usually determines relatively small values for $\Delta\varphi_{FTparameter}$ and $\Delta f_{FTparameter}$, so as to avoid the fast bus transfer exceeding its application range, with the result that the fast bus transfer cannot function adequately, thereby losing the best occasion for re-supplying the motor connected to the bus and maintaining operation continuity, while waiting for in-phase transfer to respond takes a time period of several hundreds of milliseconds. This delay will prolong the transfer time, and increase the impact current and impact moment.

WO93/06644 A1 discloses an example of a fast bus transfer method and device. This prior art is reflected by the preambles of claims 1 and 6.

Contents of the invention

The object of the present invention is to provide a fast bus transfer method to reduce, by transferring between a main power supply and a backup power supply, the impact on a load connected to a bus due to a power cut. The method is specified in claim 1.

The object of the present invention is to further provide a fast bus transfer device to reduce, by transferring between a main power supply and a backup power supply, the impact on a load connected to a bus due to a power cut. The device is specified in claim 6. Embodiments of the invention are specified in the dependent claims. The advantages of the present invention lie in the following: by way of calculating a real-time residual voltage, it is unnecessary for the user to be well-acquainted with the residual voltage characteristic; he only needs to set the limit of the voltage difference at the moment when the circuit breaker of the backup power supply is closed, and fast transfer can then be easily achieved; moreover, it is unnecessary to adjust previous settings in response to variation of the residual voltage characteristic, thereby making it extremely convenient for the user to operate, and overcoming the imperfections in the prior art.

Brief description of the accompanying drawings

The features and advantages of the present invention will become clearer in combination with the following accompanying drawings, in which identical symbols represent identical components or means:

Fig. 1 illustratively shows the characteristic of an attenuated residual voltage in the prior art;
Fig. 2 illustratively shows a system in which the method and device according to the present invention are used;
Fig. 3 illustratively shows a vector relationship among the amplitude $\Delta U_{forecast}$ of the voltage vector difference between the bus and the backup power supply, the phase angle difference $\Delta\varphi_{forecast}$ between the bus and the backup power supply, the forecast value $U_{Mforecast}$ of a motor's residual voltage, and the voltage $U_A$ of the backup power supply; and
Fig. 4 illustratively shows the characteristic of an attenuated residual voltage in the present invention.

Exemplary embodiments

Fig. 2 illustratively shows a system in which the method and/or device according to the present invention are used, in which the buses BB are electrically connected to each other during normal operation and can be connected to other loads such as a motor. A main power supply MP and a backup power supply BP can be respectively connected to the buses BB through a fast bus transfer device FBT.

The fast bus transfer method according to the present invention reduces the impact on the load connected to the buses BB (such as an electric motor) due to a power cut by transferring between the main power supply MP and the backup power supply BP, and comprises two steps:

1) calculating the amplitude $\Delta U_{forecast}$ of the voltage vector difference between the bus BB and the backup power supply BP and calculating the phase angle difference $\Delta\varphi_{forecast}$ between the bus BB and the backup power supply BP;
2) transferring the load on the bus to the backup power supply BP only when $\Delta U_{forecast}$ is less than its limit value $\Delta U_{RTFTparameter}$ and $\Delta\varphi_{forecast}$ is less than 90°.

In this case, $\Delta U_{forecast}$ and $\Delta\varphi_{forecast}$ are forecast values at the moment when the circuit breaker of the backup power supply BP is closed, while $\Delta U_{RTFTparameter}$ and 90° are permitted values at the moment when the circuit breaker of the backup power supply BP is closed.

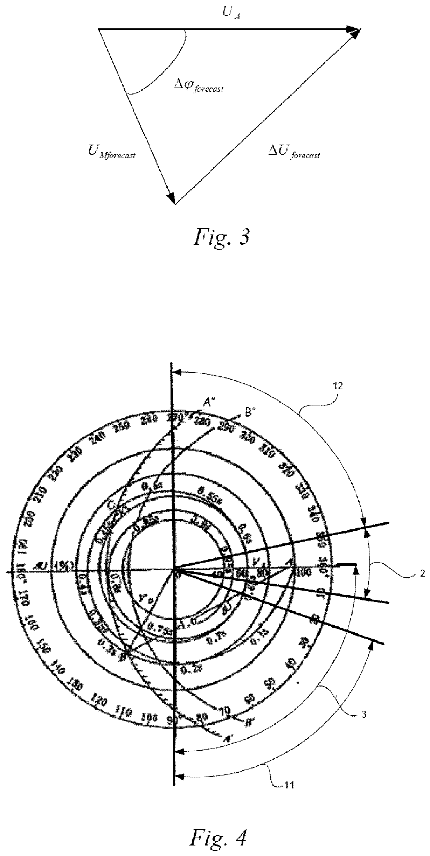

Fig. 3 illustratively shows a vector relationship among the amplitude $\Delta U_{forecast}$ of the voltage vector difference, the phase angle difference $\Delta\varphi_{forecast}$, the forecast value $U_{Mforecast}$ of the motor's residual voltage, and the voltage $U_A$ of the backup power supply. The voltage difference depends upon the angle difference between the residual voltage of the bus and the voltage of the backup power supply. $\Delta U_{forecast}$ is obtained by calculation according to the following

formula (1): $\Delta U_{forecast} = \sqrt{U_{Mforecast}^2 + U_A^2 - 2 * U_{Mforecast} * U_A * \cos\Delta\varphi_{forecast}}$, in which $U_{Mforecast}$ is a forecast value of the motor's residual voltage at the moment when the circuit breaker of the backup power supply BP is closed, and $U_A$ is the voltage of the backup power supply.

It can be known from the residual voltage characteristic formula $U(t) = U_0 * e^{-\frac{t}{\tau}} \sin\left((\omega_0 - \alpha * t) * t + \varphi_0\right)$ that

the real-time amplitude of the residual voltage at a certain moment is $U_t = U_0 * e^{-\frac{t}{\tau}}$, in which $U_0$ is the initial amplitude of the residual voltage, $\tau$ is a time constant of the attenuated residual voltage, $\omega_0$ is the initial angular velocity of the residual voltage, $\varphi_0$ is the initial phase of the residual voltage, and $\alpha$ is the attenuation rate of the angular velocity. In view of the fact that both $U_0$ and $e$ are constants, the amplitude $U_t$ at any moment $t$ can be obtained by calculation as long as the value of the time constant $\tau$ is known. This can be achieved using the following algorithm, for example, if the amplitude at the moment $t_1$ is $U_{t_1} = U_0 * e^{-\frac{t_1}{\tau}}$ and the amplitude at the moment $t_2$ is $U_{t_2} = U_0 * e^{-\frac{t_2}{\tau}}$, then $\frac{U_{t_1}}{U_{t_2}} = e^{-\frac{t_1 - t_2}{\tau}}$ is

obtained, and this is expanded using Taylor's formula to: $\frac{U_{t_1}}{U_{t_2}} = 1 - \frac{t_1 - t_2}{\tau} + \frac{1}{2} * \left(\frac{t_1 - t_2}{\tau}\right)^2$; let $\lambda = -\frac{1}{\tau}$,

$\frac{(t_1 - t_2)^2}{2} * \lambda^2 + (t_1 - t_2) * \lambda + (1 - \frac{U_{t_1}}{U_{t_2}}) = 0$ is thus obtained, and $\lambda = \frac{1 - \sqrt{\frac{2 * U_{t_1}}{U_{t_2}} - 1}}{t_2 - t_1}$ can be obtained, and the value of the

time constant $\tau$ can be obtained by calculation through $\lambda$. Suppose that the time consumed by the closing of the circuit breaker is $\Delta t$, then the predicted residual voltage of the motor is

$$U_{Mforecast} = U_0 e^{-\frac{t_{connection}}{\tau}} = U_0 e^{-\frac{t_2 + \Delta t}{\tau}} = U_0 e^{-\frac{t_2}{\tau}} * e^{-\frac{\Delta t}{\tau}} = U_{t_2} e^{-\frac{\Delta t}{\tau}},$$ and the formula (2)

$$U_{Mforecast} = U_{t_2}\left(1 + \lambda * \Delta t + \frac{1}{2} * (\lambda * \Delta t)^2\right)$$ is obtained by expanding using Taylor's formula.

In the residual mode which is already defined, the frequency attenuates linearly, therefore the following formula (3) can be used to predict the phase difference at the connecting moment, $\Delta\varphi_{forecast}$ is obtained by calculation according to the following formula: $\Delta\varphi_{forecast} = \Delta\varphi_{t_2} + \Delta\omega_{t_2} * \Delta t + \frac{1}{2} * \alpha * \Delta t^2$, in which $\Delta\omega_{t_2} = \frac{\Delta\varphi_{t_2} - \Delta\varphi_{t_1}}{t_2 - t_1}$, $\alpha = \frac{\Delta\omega_{t_2} - \Delta\omega_{t_1}}{t_2 - t_1}$,

$\Delta\omega_{t_2}$ is the angular velocity difference at the moment $t_2$, $\Delta\omega_{t_1}$ is the angular velocity difference at the moment $t_1$, $\Delta\varphi_{t_2}$ is the phase difference at the moment $t_2$, $\Delta\varphi_{t_1}$ is the phase difference at the moment $t_1$, $\alpha$ is the attenuation rate of an angular velocity defined according to the residual transfer mode, $\Delta t$ is the time difference between the moment $t_2$ and the moment $t_1$, that is, the time period for the circuit breaker to close. By substituting the above formulae (2) and (3) into formula (1), the amplitude $\Delta U_{forecast}$ of the voltage vector difference can be obtained.

According to another embodiment of the present invention, a fast bus transfer device comprises: a detection module, for detecting signals at the main power supply, the backup power supply and the bus; a calculation module, for receiving said signals, and calculating the amplitude $\Delta U_{forecast}$ of the voltage vector difference between the bus and the backup power supply and calculating the phase angle difference $\Delta\varphi_{forecast}$ between the bus and the backup power supply; a comparison module, for receiving $\Delta U_{forecast}$ and $\Delta\varphi_{forecast}$, comparing $\Delta\varphi_{forecast}$ with its limit value $\Delta U_{RTETparameter}$, and comparing $\Delta\varphi_{forecast}$ with 90°; and a transfer module, for receiving the comparison results from the comparison module, and transferring the load on the bus to said backup power supply only when $\Delta U_{forecast}$ is less than its limit value $\Delta U_{RTFTparameter}$ and $\Delta\varphi_{forecast}$ is less than 90°.

The signals detected by the detection module are various physical quantities that can be obtained without calculation in the present invention, and these physical quantities can be used as the basis for further calculation carried out using various formulae in the present invention and are sent to the calculation module.

Said calculation module obtains $\Delta U_{forecast}$ by calculation according to the following formula:

$$\Delta U_{forecast} = \sqrt{U_{Mforecast}^2 + U_A^2 - 2 * U_{Mforecast} * U_A * \cos\Delta\varphi_{forecast}},$$ in which $U_{Mforecast}$ is a forecast value of the motor's residual voltage, and $U_A$ is the voltage of the backup power supply.

Said calculation module obtains $U_{Mforecast}$ by calculation according to the following formula:

$$U_{Mforecast} = U_{t_2}\left(1 + \lambda * \Delta t + \frac{1}{2} * (\lambda * \Delta t)^2\right),$$ in which $U_{t_2}$ is the real-time amplitude at the moment $t_2$; $\Delta t$ is the time difference between the moment $t_2$ and the moment $t_1$, that is, the time period for the circuit breaker to close; and $\lambda = -\dfrac{1}{\tau}$, $\tau$ being a time constant.

Said calculation module obtains $\Delta\varphi_{forecast}$ by calculation according to the following formula:

$$\Delta\varphi_{forecast} = \Delta\varphi_{t_2} + \Delta\omega_{t_2} * \Delta t + \frac{1}{2} * \alpha * \Delta t^2$$

in which $\Delta\varphi_{t_2}$ is the phase difference at the moment $t_2$, $\Delta\omega_{t_2}$ is the angular velocity difference at the moment $t_2$, $\Delta t$ is the time difference between the moment $t_2$ and the moment $t_1$, that is, the time period for the circuit breaker to close, and $\alpha$ is the attenuation rate of an angular velocity defined according to the residual voltage transfer mode.

Said calculation module obtains $\lambda$ by calculation accord-ing to the following formula:

$$\lambda \equiv \frac{1 - \sqrt{\dfrac{2 * U_{t_1}}{U_{t_2}} - 1}}{t_2 - t_1}$$

in which $U_{t_1}$ is the real-time amplitude at the moment $t_1$.

Said calculation module obtains $\Delta\omega_{t_2}$ and $\alpha$ by calculation according to the following formulae:

$$\Delta\omega_{t_2} = \frac{\Delta\varphi_{t_2} - \Delta\varphi_{t_1}}{t_2 - t_1} \quad \text{and} \quad \alpha = \frac{\Delta\omega_{t_2} - \Delta\omega_{t_1}}{t_2 - t_1}$$

in which $\Delta\omega_{t_1}$ is the angular velocity difference at the moment $t_1$, and $\Delta\omega_{t_1}$ is the phase difference at the moment $t_1$.

Fig. 4 illustratively shows the characteristic of an attenuated residual voltage in the present invention. As compared with the prior art shown in Fig. 1, the present invention has a real-time fast transfer section which is composed of two parts: a real-time fast transfer section 11 and a real-time fast transfer section 12, as well as an in-phase transfer section 2. The real-time fast transfer section in the present invention is not only greater than the fast transfer section 30 shown in Fig. 1, but also greater than the fast transfer section 3 shown in Fig. 4. The method and device according to the present invention can utilize the safe area for re-supply more fully, thereby achieving better technical effects.

Although embodiments of the present invention are illustrated above, the described embodiments are not intended to exhibit all possible forms of the present invention. In addition, the contents of the description are illustrative rather than restrictive. All kinds of variations and modifications can be made to the contents of the description by those skilled in the art without departing from the scope of the claims.

## Claims

1. A fast bus transfer method to reduce, by transferring between a main power supply and a backup power supply, the impact on a load connected to a bus caused by a power cut, **characterized in that** the method comprises:

   1) calculating the amplitude $\Delta U_{forecast}$ of the voltage vector difference between the bus and the backup power supply and the phase angle difference $\Delta\varphi_{forecast}$ between the bus and the backup power supply, wherein $\Delta U_{forecast}$ is obtained by calculation according to the following formula:

   $$\Delta U_{forecast} = \sqrt{U_{Mforecast}^2 + U_A^2 - 2 * U_{Mforecast} * U_A * \cos\Delta\varphi_{forecast}}$$

   in which $U_{Mforecast}$ is a forecast value of the residual voltage, and $U_A$ is the voltage of the backup power supply and wherein $U_{Mforecast}$ is obtained by calculation according to the following formula:

   $$U_{Mforecast} = U_{t_2}\left(1 + \lambda * \Delta t + \frac{1}{2} * (\lambda * \Delta t)^2\right)$$

   in which $U_{t_2}$ is the real-time amplitude at the moment $t_2$ ; $\Delta t$ is the time difference between the moment $t_2$ and the moment $t_1$, that is, the time period for the circuit breaker to close; and $\lambda = -\dfrac{1}{\tau}$, $\tau$ being a time constant; and

   2) transferring the load on the bus to said backup power supply only when $\Delta U_{forecast}$ is less than its limit value $\Delta U_{RTFTparameter}$ and $\Delta\varphi_{forecast}$ is less than 90°.

2. The method as claimed in claim 1, **characterized in that** both $\Delta U_{forecast}$ and $\Delta \varphi_{forecast}$ are forecast values at the time when a circuit breaker of said backup power supply is closed.

3. The method as claimed in claim 1, **characterized in that** $\Delta \varphi_{forecast}$ is obtained by calculation according to the following formula: $\Delta \varphi_{forecast} = \Delta \varphi_{t_2} + \Delta \omega_{t_2} * \Delta t + \frac{1}{2} * \alpha * \Delta t^2$ in which $\Delta \varphi_{t_2}$ is the phase difference at the moment $t_2$, $\Delta \omega_{t_2}$ is the angular velocity difference at the moment $t_2$, $\alpha$ is the attenuation rate of an angular velocity defined according to a residual voltage transfer mode, and $\Delta t$ is the time difference between the moment $t_2$ and the moment $t_1$, that is, the time period for the circuit breaker to close.

4. The method as claimed in claim 1, **characterized in that** $\lambda$ is obtained by calculation according to the following

formula: $\lambda = \dfrac{1 - \sqrt{\dfrac{2 * U_{t_1}}{U_{t_2}} - 1}}{t_2 - t_1}$ in which $U_{t_1}$ is the real-time amplitude at the moment $t_1$.

5. The method as claimed in claim 3, **characterized in that** $\Delta \omega_{t_2}$ and $\alpha$ are obtained respectively by calculation according to the following formulae: $\Delta \omega_{t_2} = \dfrac{\Delta \varphi_{t_2} - \Delta \varphi_{t_1}}{t_2 - t_1}$ and $\alpha = \dfrac{\Delta \omega_{t_2} - \Delta \omega_{t_1}}{t_2 - t_1}$ in which $\Delta \omega_{t_1}$ is the angular velocity difference at the moment $t_1$, and $\Delta \varphi_{t_1}$ is the phase difference at the moment $t_1$.

6. A fast bus transfer device to reduce, by transferring between a main power supply and a backup power supply, the impact on a load connected to a bus caused by a power cut, **characterized in that** the device comprises:

   a detection module, for detecting signals at the main power supply, the backup power supply and the bus;
   a calculation module, for receiving said signals, and calculating the amplitude $\Delta U_{forecast}$ of the voltage vector difference between the bus and the backup power supply and the phase angle difference $\Delta \varphi_{forecast}$ between the bus and the backup power supply, wherein said calculation module obtains $\Delta U_{forecast}$ by calculation according to the following formula: $\Delta U_{forecast} = \sqrt{U_{Mforecast}^2 + U_A^2 - 2 * U_{Mforecast} * U_A * \cos \Delta \varphi_{forecast}}$ in which $U_{Mforecast}$ is a forecast value of the residual voltage, and $U_A$ is the voltage of the backup power supply and wherein said calculation module obtains $U_{Mforecast}$ by calculation according to the following formula:

   $U_{Mforecast} = U_{t_2} \left( 1 + \lambda * \Delta t + \frac{1}{2} * \left( \lambda * \Delta t \right)^2 \right)$ in which $U_{t_2}$ is the real-time amplitude at the moment $t_2$; $\Delta t$ is the time difference between the moment $t_2$ and the moment $t_1$, that is, the time period for the circuit breaker to

   close; and $\lambda = -\dfrac{1}{\tau}$ $\tau$ being a time constant;

   a comparison module, for receiving $\Delta U_{forecast}$ and $\Delta \varphi_{forecast}$, comparing $\Delta U_{forecast}$ with its limit value $\Delta U_{RTFTparameter}$, and comparing $\Delta \varphi_{forecast}$ with 90°; and
   a transfer module, for receiving the comparison results from the comparison module, so as to transfer the load on the bus to said backup power supply only when $\Delta U_{forecast}$ is less than its limit value and $\Delta \varphi_{forecast}$ is less than 90°.

7. The device as claimed in claim 6, **characterized in that** said calculation module obtains $\Delta \varphi_{forecast}$ by calculation according to the following formula: $\Delta \varphi_{forecast} = \Delta \varphi_{t_2} + \Delta \omega_{t_2} * \Delta t + \frac{1}{2} * \alpha * \Delta t^2$ in which $\Delta \varphi_{t_2}$ is the phase difference at the moment $t_2$, $\Delta \omega_{t_2}$ is the angular velocity difference at the moment $t_2$, $\Delta t$ is the time difference between

the moment $t_2$ and the moment $t_1$, that is, the time period for the circuit breaker to close, and $\alpha$ is the attenuation rate of an angular velocity defined according to a residual voltage transfer mode.

8. The device as claimed in claim 6, **characterized in that** said calculation module obtains $\lambda$ by calculation according to the following formula: $\lambda = \dfrac{1 - \sqrt{\dfrac{2 * U_{t_1} - 1}{U_{t_2}}}}{t_2 - t_1}$ in which $U_{t_1}$ is the real-time amplitude at the moment $t_1$.

9. The device as claimed in claim 7, **characterized in that** said calculation module obtains $\Delta\omega_{t_2}$ and $\alpha$ by calculation according to the following formulae: $\Delta\omega_{t_2} = \dfrac{\Delta\varphi_{t_2} - \Delta\varphi_{t_1}}{t_2 - t_1}$ and $\alpha = \dfrac{\Delta\omega_{t_2} - \Delta\omega_{t_1}}{t_2 - t_1}$ in which $\Delta\omega_{t_1}$ is the angular velocity difference at the moment $t_1$, and $\Delta\varphi_{t_1}$ is the phase difference at the moment $t_1$.

**Patentansprüche**

1. Verfahren für einen schnellen Bustransfer, so dass die durch einen Stromausfall verursachte Auswirkung auf eine Last, die mit einem Bus verbunden ist, verringert wird, indem zwischen einer Hauptstromversorgung und einer Backup-Stromversorgung transferiert wird, **dadurch gekennzeichnet, dass** das Verfahren Folgendes umfasst:

   1) Berechnen der Amplitude $\Delta U_{forecast}$ der Spannungsvektordifferenz zwischen dem Bus und der Backup-Stromversorgung und der Phasenwinkeldifferenz $\Delta\varphi_{forecast}$ zwischen dem Bus und der Backup-Stromversorgung, wobei $\Delta U_{forecast}$ durch eine Berechnung gemäß der folgenden Formel erhalten wird:

   $\Delta U_{forecast} = \sqrt{U_{Mforecast}^2 + U_A^2 - 2 * U_{Mforecast} * U_A * \cos\Delta\varphi_{forecast}}$ , wobei $U_{Mforecast}$ ein Vorhersagewert der Restspannung ist und $U_A$ die Spannung der Backup-Stromversorgung ist und wobei $U_{Mforecast}$ durch eine Berechnung gemäß der folgenden Formel erhalten wird:

   $U_{Mforecast} = U_{t_2}\left(1 + \lambda * \Delta t + \dfrac{1}{2} * (\lambda * \Delta t)^2\right)$ , wobei $U_{t_2}$ die Echtzeitamplitude zum Zeitpunkt $t_2$ ist; $\Delta t$ die Zeitdifferenz zwischen dem Zeitpunkt $t_2$ und dem Zeitpunkt $t_1$ ist, das heißt, der Zeitraum, den der Unterbrecherschalter braucht, sich zu schließen; und $\lambda = -\dfrac{1}{\tau}$ ist, wobei $\tau$ eine Zeitkonstante ist; und

   2) Transferieren der Last auf dem Bus zur Backup-Stromversorgung nur dann, wenn $\Delta U_{forecast}$ kleiner als ihr Grenzwert $\Delta U_{RTFTparameter}$ ist und $\Delta\varphi_{forecast}$ kleiner als 90° ist.

2. Verfahren nach Anspruch 1, **dadurch gekennzeichnet, dass** sowohl $\Delta U_{forecast}$ als auch $\Delta\varphi_{forecast}$ Vorhersagewerte zu dem Zeitpunkt sind, wenn ein Unterbrecherschalter der Backup-Stromversorgung geschlossen ist.

3. Verfahren nach Anspruch 1, **dadurch gekennzeichnet, dass** $\Delta\varphi_{forecast}$ durch eine Berechnung gemäß der folgenden Formel erhalten wird: $\Delta\varphi_{forecast} = \Delta\varphi_{t_2} + \Delta\omega_{t_2} * \Delta t + \dfrac{1}{2} * \alpha * \Delta t^2$ , wobei $\Delta\varphi_{t_2}$ die Phasendifferenz zum Zeitpunkt $t_2$ ist, $\Delta\omega_{t_2}$ die Winkelgeschwindigkeitsdifferenz zum Zeitpunkt $t_2$ ist, $\alpha$ die Dämpfungsrate einer Winkelgeschwindigkeit ist, die gemäß einem Restspannungstransfermodus definiert ist, und $\Delta t$ die Zeitdifferenz zwischen dem Zeitpunkt $t_2$ und dem Zeitpunkt $t_1$ ist, das heißt, der Zeitraum, den der Unterbrecherschalter braucht, sich zu schließen.

4. Verfahren nach Anspruch 1, **dadurch gekennzeichnet, dass** $\lambda$ durch eine Berechnung gemäß der folgenden

Formel erhalten wird: $\lambda = \dfrac{1 - \sqrt{\dfrac{2 * U_{t_1}}{U_{t_2}} - 1}}{t_2 - t_1}$ , wobei $U_{t_1}$ die Echtzeitamplitude zum Zeitpunkt $t_1$ ist.

**5.** Verfahren nach Anspruch 3, **dadurch gekennzeichnet, dass** $\Delta\omega_{t_2}$ und $\alpha$ jeweils durch eine Berechnung gemäß den folgenden Formeln erhalten werden: $\Delta\omega_{t_2} = \dfrac{\Delta\varphi_{t_2} - \Delta\varphi_{t_1}}{t_2 - t_1}$ und $\alpha = \dfrac{\Delta\omega_{t_2} - \Delta\omega_{t_1}}{t_2 - t_1}$ , wobei $\Delta\omega_{t_1}$ die Winkelgeschwindigkeitsdifferenz zum Zeitpunkt $t_1$ ist und $\Delta\varphi_{t_1}$ die Phasendifferenz zum Zeitpunkt $t_1$ ist.

**6.** Einrichtung für einen schnellen Bustransfer, so dass die durch einen Stromausfall verursachte Auswirkung auf eine Last, die mit einem Bus verbunden ist, verringert wird, indem zwischen einer Hauptstromversorgung und einer Backup-Stromversorgung transferiert wird, **dadurch gekennzeichnet, dass** die Einrichtung Folgendes umfasst:

ein Detektionsmodul zum Detektieren von Signalen an der Hauptstromversorgung, der Backup-Stromversorgung und dem Bus;

ein Berechnungsmodul zum Empfangen der Signale und zum Berechnen der Amplitude $\Delta U_{forecast}$ der Spannungsvektordifferenz zwischen dem Bus und der Backup-Stromversorgung und der Phasenwinkeldifferenz $\Delta\varphi_{forecast}$ zwischen dem Bus und der Backup-Stromversorgung, wobei das Berechnungsmodul $\Delta U_{forecast}$ durch eine Berechnung gemäß der folgenden Formel erhält:

$$\Delta U_{forecast} = \sqrt{U_{Mforecast}{}^2 + U_A{}^2 - 2 * U_{Mforecast} * U_A * \cos\Delta\varphi_{forecast}}$$ , wobei $U_{Mforecast}$ ein Vorhersagewert der Restspannung ist und $U_A$ die Spannung der Backup-Stromversorgung ist und wobei das Berechnungsmodul $U_{Mforecast}$ durch eine Berechnung gemäß der folgenden Formel erhält:

$$U_{Mforecast} = U_{t_2}\left(1 + \lambda * \Delta t + \frac{1}{2} * \left(\lambda * \Delta t\right)^2\right)$$ , $U_{Mforecast}$ wobei $U_{t_2}$ die Echtzeitamplitude zum Zeitpunkt $t_2$ ist; $\Delta t$ die Zeitdifferenz zwischen dem Zeitpunkt $t_2$ und dem Zeitpunkt $t_1$ ist, das heißt, der Zeitraum, den der Unterbrecherschalter braucht, sich zu schließen; und $\lambda = -\dfrac{1}{\tau}$ ist, wobei $\tau$ eine Zeitkonstante ist;

ein Vergleichsmodul zum Empfangen von $\Delta U_{forecast}$ und $\Delta\varphi_{forecast}$, zum Vergleichen von $\Delta\varphi_{forecast}$ mit ihrem Grenzwert $\Delta U_{RTFTparameter}$ und zum Vergleichen von $\Delta\varphi_{forecast}$ mit 90°; und

ein Transfermodul zum Empfangen der Vergleichsergebnisse vom Vergleichsmodul, so dass die Last auf dem Bus zur Backup-Stromversorgung nur transferiert wird, wenn $\Delta U_{forecast}$ kleiner als ihr Grenzwert ist und $\Delta\varphi_{forecast}$ kleiner als 90° ist.

**7.** Einrichtung nach Anspruch 6, **dadurch gekennzeichnet, dass** das Berechnungsmodul $\Delta\varphi_{forecast}$ durch eine Berechnung gemäß der folgenden Formel erhält: $\Delta\varphi_{forecast} = \Delta\varphi_{t_2} + \Delta\omega_{t_2} * \Delta t + \dfrac{1}{2} * \alpha * \Delta t^2$ , wobei $\Delta\varphi_{t_2}$ die Phasendifferenz zum Zeitpunkt $t_2$ ist, $\Delta\omega_{t_2}$ die Winkelgeschwindigkeitsdifferenz zum Zeitpunkt $t_2$ ist, $\Delta t$ die Zeitdifferenz zwischen dem Zeitpunkt ist $t_2$ und dem Zeitpunkt $t_1$ ist, das heißt, der Zeitraum, den der Unterbrecherschalter braucht, sich zu schließen, und $\alpha$ die Dämpfungsrate einer Winkelgeschwindigkeit ist, die gemäß einem Restspannungstransfermodus definiert ist.

**8.** Einrichtung nach Anspruch 6, **dadurch gekennzeichnet, dass** das Berechnungsmodul $\lambda$ durch eine Berechnung gemäß der folgenden Formel erhält: $\lambda = \dfrac{1 - \sqrt{\dfrac{2 * U_{t_1}}{U_{t_2}} - 1}}{t_2 - t_1}$ , wobei $U_{t_1}$ die Echtzeitamplitude zum Zeitpunkt $t_1$ ist.

9. Einrichtung nach Anspruch 7, **dadurch gekennzeichnet, dass** das Berechnungsmodul $\Delta\omega_{t_2}$ und $\alpha$ durch eine Berechnung gemäß der folgenden Formeln erhält: $\Delta\omega_{t_2} = \dfrac{\Delta\varphi_{t_2} - \Delta\varphi_{t_1}}{t_2 - t_1}$ und $\alpha = \dfrac{\Delta\omega_{t_2} - \Delta\omega_{t_1}}{t_2 - t_1}$, wobei $\Delta\omega_{t_1}$ die Winkelgeschwindigkeitsdifferenz zum Zeitpunkt $t_1$ ist und $\Delta\varphi_{t_1}$ die Phasendifferenz zum Zeitpunkt $t_1$ ist.

## Revendications

1. Procédé de transfert de bus rapide pour réduire, par transfert entre une alimentation électrique principale et une alimentation électrique de secours, l'impact sur une charge connectée à un bus provoqué par une coupure de courant, **caractérisé en ce que** le procédé comprend :

    1) le calcul de l'amplitude $\Delta U_{prévision}$ de la différence de vecteur de tension entre le bus et l'alimentation électrique de secours et la différence d'angle de phase $\Delta\varphi_{prévision}$ entre le bus et l'alimentation électrique de secours, dans lequel $\Delta U_{prévision}$ est obtenue par calcul selon la formule suivante :

    $$\Delta U_{prévision} = \sqrt{U_{Mprévision}^2 + U_A^2 - 2 * U_{Mprévision} * U_A * \cos\Delta\varphi_{prévision}}$$ dans laquelle $U_{Mprévision}$ est une valeur de prévision de la tension résiduelle, et $U_A$ est la tension de l'alimentation électrique de secours et dans lequel $U_{Mprévision}$ est obtenue par calcul selon la formule suivante : $$U_{Mprévision} = U_{t_2}\left(1 + \lambda * \Delta t + \frac{1}{2} * (\lambda * \Delta t)^2\right)$$ dans laquelle $U_{t_2}$ est l'amplitude en temps réel au moment $t_2$ ; $\Delta t$ est la différence de temps entre le moment $t_2$ et le moment $t_1$, c'est-à-dire, la période de temps pour que le disjoncteur se ferme ; et $\lambda = -\dfrac{1}{\tau}$, $\tau$ étant une constante de temps ; et

    2) le transfert de la charge sur le bus à ladite alimentation électrique de secours uniquement lorsque $\Delta U_{prévision}$ est inférieure à sa valeur limite $\Delta U_{RTFTparamètre}$ et $\Delta\varphi_{prévision}$ est inférieure à 90°.

2. Procédé selon la revendication 1, **caractérisé en ce que** $\Delta U_{prévision}$ et $\Delta\varphi_{prévision}$ sont toutes deux des valeurs de prévision à l'instant où un disjoncteur de ladite alimentation électrique de secours est fermé.

3. Procédé selon la revendication 1, **caractérisé en ce que** $\Delta\varphi_{prévision}$ est obtenue par calcul selon la formule suivante :

    $$\Delta\varphi_{prévision} = \Delta\varphi_{t_2} + \Delta\omega_{t_2} * \Delta t + \frac{1}{2} * \alpha * \Delta t^2$$ dans laquelle $\Delta\varphi_{t_2}$ est la différence de phase au moment $t_2$, $\Delta\omega_{t_2}$ est la différence de vitesse angulaire au moment $t_2$, $\alpha$ est le taux d'atténuation d'une vitesse angulaire définie selon un mode de transfert de tension résiduelle, et $\Delta t$ est la différence de temps entre le moment $t_2$ et le moment $t_1$, c'est-à-dire, la période de temps pour que le disjoncteur se ferme.

4. Procédé selon la revendication 1, **caractérisé en ce que** A est obtenu par calcul selon la formule suivante :

    $$\lambda = \frac{1 - \sqrt{\dfrac{2 * U_{t_1}}{U_{t_2}} - 1}}{t_2 - t_1}$$ dans laquelle $U_{t_1}$ est l'amplitude en temps réel au moment $t_1$.

5. Procédé selon la revendication 3, **caractérisé en ce que** $\Delta\omega_{t_2}$ et $\alpha$ sont obtenus respectivement par calcul selon les formules suivantes : $\Delta\omega_{t_2} = \dfrac{\Delta\varphi_{t_2} - \Delta\varphi_{t_1}}{t_2 - t_1}$ et $\alpha = \dfrac{\Delta\omega_{t_2} - \Delta\omega_{t_1}}{t_2 - t_1}$ dans lesquelles $\Delta\omega_{t_1}$ est la différence de vitesse angulaire au moment $t_1$, et $\Delta\varphi_{t_1}$ est la différence de phase au moment $t_1$.

**6.** Dispositif de transfert de bus rapide pour réduire, par transfert entre une alimentation électrique principale et une alimentation électrique de secours, l'impact sur une charge connectée à un bus provoqué par une coupure de courant, **caractérisé en ce que** le dispositif comprend :

un module de détection, pour détecter des signaux au niveau de l'alimentation électrique principale, de l'alimentation électrique de secours et du bus ; un module de calcul, pour recevoir lesdits signaux, et

calculer l'amplitude $\Delta U_{prévision}$ de la différence de vecteur de tension entre le bus et l'alimentation électrique de secours et la différence d'angle de phase $\Delta\varphi_{prévision}$ entre le bus et l'alimentation électrique de secours, dans lequel ledit module de calcul obtient $\Delta U_{prévision}$ par calcul selon la formule suivante :

$$\Delta U_{prévision} = \sqrt{U_{Mprévision}^2 + U_A^2 - 2 * U_{Mprévision} * U_A * \cos\Delta\varphi_{prévision}}$$ dans laquelle $U_{Mprévision}$ est une valeur de prévision de la tension résiduelle, et $U_A$ est la tension de l'alimentation électrique de secours et dans lequel ledit module de calcul obtient $U_{Mprévision}$ par calcul selon la formule suivante :

$$U_{Mprévision} = U_{t_2}\left(1 + \lambda * \Delta t + \frac{1}{2} * (\lambda * \Delta t)^2\right)$$ dans laquelle $U_{t_2}$ est l'amplitude en temps réel au moment $t_2$ ;

$\Delta_t$ est la différence de temps entre le moment $t_2$ et le moment $t_1$, c'est-à-dire, la période de temps pour que le disjoncteur se ferme ; et $\lambda = -\dfrac{1}{\tau}$ $\tau$ étant une constante de temps ; un module de comparaison, pour recevoir

$\Delta U_{prévision}$ et $\Delta\varphi_{prévision}$, comparer $\Delta\varphi_{prévision}$ avec sa valeur limite $\Delta U_{RTFTparamètre}$ et comparer $\Delta\varphi_{prévision}$ avec 90° ; et

un module de transfert, pour recevoir les résultats de comparaison en provenance du module de comparaison, de façon à transférer la charge sur le bus à ladite alimentation électrique de secours uniquement lorsque $\Delta U_{prévision}$ est inférieure à sa valeur limite et $\Delta\varphi_{prévision}$ est inférieure à 90°.

**7.** Dispositif selon la revendication 6, **caractérisé en ce que** ledit module de calcul obtient $\Delta\varphi_{prévision}$ par calcul selon

la formule suivante : $$\Delta\varphi_{prévision} = \Delta\varphi_{t_2} + \Delta\omega_{t_2} * \Delta t + \frac{1}{2} * \alpha * \Delta t^2$$ dans laquelle $\Delta\varphi_{t_2}$ est la différence de phase

au moment $t_2$, $\Delta\omega_{t_2}$ est la différence de vitesse angulaire au moment $t_2$, $\Delta t$ est la différence de temps entre le moment $t_2$ et le moment $t_1$, c'est-à-dire, la période de temps pour que le disjoncteur se ferme, et $\alpha$ est le taux d'atténuation d'une vitesse angulaire définie selon un mode de transfert de tension résiduelle.

**8.** Dispositif selon la revendication 6, **caractérisé en ce que** ledit module de calcul obtient $\lambda$ par calcul selon la formule

suivante : $$\lambda = \frac{1 - \sqrt{\dfrac{2 * U_{t_1}}{U_{t_2}} - 1}}{t_2 - t_1}$$ dans laquelle $U_{t_1}$ est l'amplitude en temps réel au moment $t_1$.

**9.** Dispositif selon la revendication 7, **caractérisé en ce que** ledit module de calcul obtient $\Delta\omega_{t_2}$ et $\alpha$ par calcul selon

les formules suivantes : $$\Delta\omega_{t_2} = \frac{\Delta\varphi_{t_2} - \Delta\varphi_{t_1}}{t_2 - t_1}$$ et $$\alpha = \frac{\Delta\omega_{t_2} - \Delta\omega_{t_1}}{t_2 - t_1}$$ dans lesquelles $\Delta\omega_{t_1}$ est la différence

de vitesse angulaire au moment $t_1$, et $\Delta\varphi_{t_1}$ est la différence de phase au moment $t_1$.

Fig. 1

Fig. 2

Fig. 3

Fig. 4

**EP 2 681 825 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9306644 A1